# EUROPÄISCHE PATENTSCHRIFT

(11) **EP 0 520 182 B1**
(45) Veröffentlichungstag und Bekanntmachung des Hinweises auf die Patenterteilung: **20.03.1996**
(21) Anmeldenummer: 92108389.5
(22) Anmeldetag: 19.05.1992
(51) Int. Cl.: C14C 3/20, C08G 14/06

(54) **Kondensationsprodukte aus sulfonierten Phenolen, Harnstoff, weiteren organischen Stickstoff-Basen und Formaldehyd und ihre Verwendung als Gerbstoffe und als Sprühhilfsmittel für redispergierbare Polymerpulver**
Condensates of sulphonated phenols, urea, other organic nitrogen containing bases and formaldehyde and their use as tanning agent or as spray composition for redispersable polymer powders
Produits de condensation de phénols sulfonés, d'urée, d'autres bases organiques azotées et de formaldéhyde et leur utilisation comme agent de tannage et comme agent de pulvérisation de poudres de polymère redispersables

(30) Priorität: 01.06.1991 DE 4118007
(43) Veröffentlichungstag der Anmeldung: 30.12.1992
(73) Patentinhaber: BASF Aktiengesellschaft, D-67063 Ludwigshafen (DE)
(72) Erfinder: Weiser, Juergen, Dr., W-6905 Schriesheim (DE); Reuther, Wolfgang, Dr., W-6900 Heidelberg (DE); Stork, Karl, Dr., W-6719 Weisenheim a. Berg (DE); Schaffer, Ortwin, Dr., W-6700 Ludwigshafen (DE); Franzmann, Gernot, Dr., W-6719 Bobenheim (DE); Schwerzel, Thomas, Dr., W-6701 Meckeheim (DE); Angel, Maximilian, Dr., W-6704 Mutterstadt (DE); Pakusch, Joachim, Dr., W-6700 Ludwigshafen (DE); Wegner, Brigitte, Dr., W-6720 Speyer (DE)

(56) Entgegenhaltungen:
- EP-A- 0 407 889
- DE-A- 3 427 694
- DE-A- 3 933 478
- FR-B- 1 548 180
- FR-B- 2 163 108

## Beschreibung

Die vorliegende Erfindung betrifft neue Kondensationsprodukte aus sulfonierten Phenolen, Harnstoff, weiteren organischen Stickstoff-Basen und Formaldehyd, ein Verfahren zu ihrer Herstellung, ihre Verwendung als Gerbstoffe bei der Leder- und Fellherstellung und als Sprühhilfsmittel für redispergierbare Polymerpulver sowie diese Kondensationsprodukte enthaltende Gerbstoffe und Sprühhilfsmittel.

Synthetische Gerbstoffe auf Basis von Kondensationsprodukten aus sulfonierten Phenolen oder Mischungen sulfonierter und unsulfonierter Phenole, Harnstoff und Formaldehyd sind beispielsweise aus den deutschen Patentschriften 06 87 066 (1), 07 01 563 (2) und 11 13 457 (3) bekannt.

In der deutschen Patentschrift 21 58 610 (4) werden Kondensationsprodukte aus sulfonierten Phenolen, Formaldehyd, Harnstoff, Melamin und/oder Dicyandiamid und Bisulfit beschrieben, welche durch Umsetzung von auf pH-Werte von 10 bis 13 eingestellten Vorkondensaten aus Phenolsulfonsäure, Harnstoff und Formaldehyd mit sulfitierten Methylolverbindungen von Harnstoff, Melamin und/oder Dicyandiamid erhältlich sind. Diese Kondensationsprodukte eignen sich als Gerbstoffe.

Die genannten Gerbstoffe weisen jedoch eine Reihe von Nachteilen auf. Die mit ihnen hergestellten Leder und Felle sind nicht ausreichend lichtecht und wärmeresistent, d.h. sie vergilben leicht und verlieren schnell ihren weichen Griff und ihre Fülle und werden brüchig. Die Gerbstoffe selbst weisen eine geringe Lagerstabilität auf und sind nur schlecht wasserlöslich. Deshalb ist ihre Gerbwirkung zum Teil unbefriedigend.

In der deutschen Offenlegungsschrift 39 23 229 (5) werden Phenolsulfonsäure-Formaldehyd-Kondensationsprodukte als Hilfsmittel zur Herstellung von Polymerpulvern aus Dispersionen beschrieben. Durch die Verwendung dieser Sprühhilfsmittel erhält man Polymerpulver, die sehr gut redispergierbar und blockfest sind. Nachteilig ist jedoch, das bedingt durch die braune Farbe des Sprühhilfsmittels auch braune Polymerpulver erhalten werden. Da diese Sprühhilfsmittel wasserlösliche Produkte darstellen, besteht die Gefahr, daß diese Hilfsmittel nach der Verfilmung des redispergierten Polymers unter Wassereinwirkung wieder ausgewaschen werden können. Dies führt z.B. bei der Verwendung von Polymerpulvern in zementösen Systemen zu einer sichtbaren Farbveränderung des Endproduktes.

Ein anderer Typ von Sprühhilfsmitteln, nämlich Melaminsulfonsäure-Formaldehyd-Kondensationsprodukte, wird in der deutschen Offenlegungsschrift 20 49 114 (6) beschrieben. Diese ergeben zwar farblose Dispersionspulver, jedoch ist die Redispergierbarkeit und das Blockverhalten der gesprühten Produkte noch verbesserungsbedürftig.

Aufgabe der vorliegenden Erfindung war es daher, den geschilderten Nachteilen des Standes der Technik abzuhelfen.

Demgemäß wurden Kondensationsprodukte aus sulfonierten Phenolen, Harnstoff, weiteren organischen Stickstoff-Basen und Formaldehyd gefunden, welche erhältlich sind durch
(A) Sulfonierung von Phenolen mit 1,0 bis 1,5 mol Schwefelsäure pro Mol Phenol und
(B) Kondensation dieser Sulfonierungsprodukte in saurem Milieu bei pH-werten von 0 bis etwa 5 mit
   (a) 0,5 bis 1,8 mol Harnstoff pro Mol Phenol,
   (b) 0,001 bis 0,5 mol mindestens einer weiteren organischen Stickstoff-Base pro Mol Phenol aus der Gruppe
      - Melamin (2,4,6-Triamino-1,3,5-triazin);
      - Melamin-Derivate in Form von Eydroxy-C₂-C₂₀-alkyl-melaminen, Bis-hydroxy-C₂-C₂₀-alkyl-melaminen oder Tris-hydroxy-C₂-C₂₀-alkyl-melaminen, wobei die Alkylgruppe geradkettig oder verzweigt sein kann und die Eydroxylgruppe an einem primären, sekundären oder tertiären C-Atom stehen kann, Hydroxyaryl-melaminen oder Melaminen mit ein bis drei Polyalkylenoxid-Ketten an den N-Atomen, wobei diese polyalkoxylierten Verbindung durch Ethoxylierung, Propoxylierung oder Butoxylierung von Melamin hergestellt werden und Alkoxylierungsgrade von jeweils 2 bis 4 aufweisen;
      - Melem (2,5,8-Triamino-1,3,4,6,7,9,9b-heptaazaphenalen);
      - Melem-Derivate in Form von Hydroxy-C₂-C₂₀-alkylmelemen oder Melemen mit Polyethylen-, Polypropylen- oder Polybutylenoxid-Seitenketten mit einem Alkoxylierungsgrad von jeweils 2 bis 4 an den N-Atomen;
      - Guanamine (in 6-Stellung substituierte 2,4-Diamino-1,3,5-triazine);
      - Derivate von Guanaminen in Form von N-Hydroxy-C₂-C₂₀-alkyl-guanaminen, wobei die Alkylgruppe geradkettig oder verzweigt sein kann und die Hydroxylgruppe an einem primären, sekundären oder tertiären C-Atom stehen kann, oder Guanaminen mit ein oder zwei Polyalkylenoxid-Ketten an den N-Atomen, wobei diese polyalkoxylierten Verbindungen durch Ethoxylierung, Propoxylierung oder Butoxylierung von Guanaminen hergestellt werden und Alkoxylierungsgrade von jeweils 2 bis 4 aufweisen;
      - Dicyandiamid;
         und
   (c) 1,0 bis 3,0 mol Formaldehyd pro Mol Phenol.

Als Phenole können z.B. Halogenphenole wie Chlorphenole, Alkylphenole wie Kresole oder Xylenole, Resorcin, Pyrogallol, Naphthole sowie unsubstituiertes Phenol, ferner Bisphenole wie Dihydroxydiphenylpropane oder Dihydroxydiphenylsulfone verwendet werden. Bevorzugt werden o-, m- und p-Kresol, p-Mono(C₂- bis C₄-)alkylphenole und vor allem unsubstituiertes Phenol.

Zur Sulfonierung (A) dient üblicherweise eine 96-98 gew.-%ige Schwefelsäure, die im Handel als konzentrierte Schwefelsäure erhältlich ist. Man kann aber auch bei reaktionsträgeren Phenolen wasserfreie, d.h. 100 gew.-%ige Schwefelsäure oder Oleum mit einem SO₃-Gehalt von bis zu ca. 65 Gew.-%, insbesondere bis zu ca. 30 Gew.-%, verwenden. Ebenso funktioniert die Sulfonierung der Phenole in vielen Fällen auch noch mit wasserhaltiger Schwefelsäure mit einem maximalen Gehalt an Wasser von ca. 10 Gew.-%.

Als organisch Stickstoff-Basen werden Melamin, N-polyoxyalkylierte Melamine mit einem Alkoxylierungsgrad von jeweils 2 bis 4 und Dicyandiamid besonders bevorzugt.

Der Formaldehyd wird üblicherweise als 10 bis 50 gew.-%ige wäßrige Lösung eingesetzt; im Handel sind 30 bis 35 gew.-%ige wäßrige Lösungen erhältlich. Man kann stattdessen aber auch unter den Reaktionsbedingungen formaldehydabspaltende Substanzen wie Paraformaldehyd einsetzen.

Die Sulfonierung (A) erfolgt mit 1,0 bis 1,5 mol, vorzugsweise 1,05 bis 1,4 mol Schwefelsäure pro Mol Phenol. Man arbeitet in der Regel bei Temperaturen von 50 bis 150°C, insbesondere 65 bis 120°C, und üblicherweise bei Normaldruck. Die Umsetzung ist meist nach 2 bis 4 Stunden beendet.

Vor Zugabe der Komponenten (a) bis (c) wird das Sulfonierungsprodukt zweckmäßigerweise in Wasser aufgenommen, um den Kondensationsschritt (B) durchführen zu können.

Die Kondensation (B) erfolgt vorteilhafterweise in saurem Milieu bei pH-Werten von 0 bis etwa 5. Die hohe Wasserstoffionenkonzentration ist meist schon durch überschüssige Schwefelsäure aus dem Sulfonierungsschritt (A) und/oder durch die Dissoziation der Sulfonierungsprodukte aus (A) in Wasser gegeben. Zur Einstellung von bestimmten Werten innerhalb des genannten pH-Bereiches dienen die üblichen Säuren und Basen.

Pro Mol Phenol werden als Komponente (a) 0,5 bis 1,8 mol, vorzugsweise 0,8 bis 1,2 mol Harnstoff, als Komponente (b) 0,001 bis 0,5 mol, vorzugsweise 0,01 bis 0,3 mol, insbesondere 0,05 bis 0,2 mol mindestens einer weiteren organischen Stickstoff-Base und als Komponente (c) 1,0 bis 3,0 mol, vorzugsweise 1,5 bis 2,5 mol, insbesondere 1,7 bis 2,0 mol Formaldehyd eingesetzt.

Die Reihenfolge und die Art der Zugabe der Komponenten (a) und (b) ist im Prinzip unkritisch. Die Komponente (c) sollte aber als letzte und über einen längeren Zeitraum, etwa 15 Minuten bis 4 Stunden, insbesondere 30 Minuten bis 2 Stunden, bei einer Temperatur von etwa 60 bis etwa 80°C zudosiert werden. Anschließend wird in der Regel zur Vervollständigung der Umsetzung bei Temperaturen von etwa 60 bis 95°C innerhalb von 15 Minuten bis 3 Stunden nachkondensiert.

Die Durchführung der Reaktionsfolge aus (A) und (B) kann sowohl in einer Stufe als auch in zwei parallel geführten Stufen erfolgen. In der zweistufigen Fahrweise werden bei den beiden Stufen unterschiedliche Mengen an Einsatzstoffen verwendet. Nach gemeinsamer Nachkondensation der beiden Stufen entspricht die gesamte Zusammensetzung den beanspruchten Werten für die eingesetzten Mengen.

Die kondensierten sauren Harzlösungen werden durch Zugabe üblicher Basen auf etwa pH 7 eingestellt und anschließend durch Zugabe von Säuren, vorzugsweise Carbonsäuren wie Ameisensäure, Essigsäure, Propionsäure, Benzoesäure, Malonsäure, Bernsteinsäure, Glutarsäure, Adipinsäure oder Gemischen hieraus, wieder auf einen pH von vorteilhafterweise 3 bis 5, insbesondere 3,5 bis 4, gebracht. Die erhaltenen Kondensationsprodukte können sowohl als wäßrige Lösung als auch in Form der sprühgetrockneten Pulver eingesetzt werden.

Gegenstand der vorliegenden Erfindung ist weiterhin ein Verfahren zur Herstellung von Kondensationsprodukten aus sulfonierten Phenolen, Harnstoff, weiteren organischen Stickstoff-Basen und Formaldehyd, welches dadurch gekennzeichnet ist, daß man
(A) Phenole mit 1,0 bis 1,5 mol Schwefelsäure pro Mol Phenol sulfoniert und
(B) diese Sulfonierungsprodukte im sauren Milieu bei pH-Werten von 0 bis etwa 5 mit
   (a) 0,5 bis 1,8 mol Harnszoff pro Mol Phenol,
   (b) 0,001 bis 0,5 mol mindestens einer weiteren organischen Stickstoff-Base pro Mol Phenol aus der Gruppe
      - Melamin (2,4,6-Triamino-1,3,5-triazin;
      - Melamin-Derivate in Form von Hydroxy-C₂-C₂₀-alkyl-melaminen, Bis-hydroxy-C₂-C₂₀-alkyl-melaminen oder Tris-hydroxy-C₂-C₂₀-alkyl-melaminen, wobei die Alkylgruppe geradkettig oder verzweigt sein kann und die Hydroxylgruppe an einem primären, sekundären oder tertiären C-Atom stehen kann, Hydroxyaryl-melaminen oder Melaminen mit ein bis drei Polyalkylenoxid-Ketten an den N-Atomen, wobei diese polyalkoxylierten Verbindung durch Ethoxylierung, Propoxylierung oder Butoxylierung von Melamin hergestellt werden und Alkoxylierungsgrade von jeweils 2 bis 4 aufweisen;
      - Melem (2,5,8-Triamino-1,3,4,6,7,9,9b-heptaazaphenalen);
      - Melem-Derivate in Form von Hydroxy-C₂-C₂₀-alkylmelemen oder Melemen mit Polyethylen-, Polypropylen- oder Polybutylenoxid-Seitenketten mit einem Alkoxylierungsgrad von jeweils 2 bis 4 an den N-Atomen;
      - Guanamine (in 6-Stellung substituierte 2,4-Diamino-1,3,5-triazine);
      - Derivate von Guanaminen in Form von N-Hydroxy-C₂-C₂₀-alkyl-guanaminen, wobei die Alkylgruppe geradkettig oder verzweigt sein kann und die Hydroxylgruppe an einem primären, sekundären oder tertiären C-Atom stehen kann, oder Guanaminen mit ein oder zwei Polyalkylenoxid-Ketten an den N-Atomen, wobei diese polyalkoxylierten Verbindungen durch Ethoxylierung, Propoxylierung oder Butoxylierung von Guanaminen hergestellt werden und Alkoxylierungsgrade von jeweils 2 bis 4 aufweisen;
      - Dicyandiamid;
         und
   (c) 1,0 bis 3,0 mol Formaldehyd pro Mol Phenol.

Die erfindungsgemäßen Kondensationsprodukte eignen sich in hervorragender Weise als Gerbstoffe bei der Leder- und Fellherstellung.

So können die erfindungsgemäßen Kondensationsprodukte zum Alleingerben und Vorgerben von Blößen und Fellblößen in wäßriger Flotte verwendet werden. Hierbei geht man zweckmäßigerweise so vor, daß die gepickelten Blößen, beispielsweise Rindsblößen mit einer Spaltstärke von 1,5 bis 4 mm, oder Fellblößen, beispielsweise Schaffellblößen, bei einem pH-Wert von 2 bis 7, insbesondere 2,5 bis 4, und einer Temperatur von 15 bis 40°, insbesondere 20 bis 35°C, während eines Zeitraumes von 3 bis 20 Stunden mit einer wäßrigen Lösung der erfindungsgemäßen Kondensationsprodukte behandelt werden. Die Behandlung erfolgt beispielsweise durch Walken in einem Faß. Die benötigte Menge an erfindungsgemaßen Kondensationsprodukten betragt normalerweise, bezogen auf das Blößengewicht, 2 bis 30 Gew.-%, insbesondere 5 bis 25 Gew.-%. Die Flottenlänge, d. h. das prozentuale Gewichtsverhältnis der Behandlungsflotte zur Ware, beträgt üblicherweise 30 bis 200 % bei Blößen und 100 bis 2000 % bei Fellblößen, jeweils bezogen auf das Blößengewicht.

Nach erfolgter Behandlung wird das Leder bzw. Fell üblicherweise auf einen pH-Wert von 2 bis 8, insbesondere 3 bis 5, eingestellt, wozu man beispielsweise Magnesiumoxid, Natriumcarbonat, Natriumhydrogencarbonat oder eine organische weiteren Gerbstoffen behandelt und Salze verwendet, gegebenenfalls mit weiteren Gerbstoffen behandelt und gegen Ende oder nach Abschluß des Gerbeprozesses gewünschtenfalls gefärbt und gefettet.

Weiterhin können die erfindungsgemäßen Kondensationsprodukte zum Mitgerben von Blößen und Fellblößen zusammen mit den Gerbstoffen der Hauptgerbung, welche beispielsweise eine Chrom- oder eine Aluminiumgerbung sein kann, verwendet werden. In diesem Fall werden die Arbeitsbedingungen bezüglich pH-Wert, Temperatur und Dauer der Behandlung auf die Anforderungen der Hauptkomponenten der Gerbung eingestellt, das gleiche gilt für die Behandlungsapparatur und die Flottenlänge sowie für die Nachbehandlung. Die benötigte Menge an erfindungsgemäßen Kondensationsprodukten beträgt hierbei normalerweise, bezogen auf das Blößengewicht, 0,1 bis 20 Gew.-%, insbesondere 0,5 bis 15 Gew.-%.

Weiterhin können die erfindungsgemäßen Kondensationsprodukte zum Nachgerben von bereits gegerbtem Leder und Fell, beispielsweise Chromleder, in wäßriger Flotte verwendet werden. Hierbei arbeitet man in der Regel so, daß man die gepickelten Blößen und Felle, beispielsweise Rindsblößen mit Spaltstärken von 1,5 bis 4 mm, mit beispielsweise einem üblichen chromhaltigen Gerbstoff wie einem Chrom(III)-Salz, z. B. Chrom(III)-Sulfat, in an sich bekannter Weise gerbt, die so erhaltenen vorgegerbten Häute (bei Chromgerbung "Wetblues") entsäuert und bei einem pH-Wert von 2 bis 7, insbesondere 2,5 bis 4, und bei Temperaturen von 15 bis 60°C, insbesondere 25 bis 45°C, während eines Zeitraumes von 1 bis 12 Stunden mit einer wäßrigen Lösung der erfindungsgemäßen Kondensationsprodukte behandelt. Diese Behandlung erfolgt beispielsweise durch Walken in einem Faß. Die benötigte Menge an erfindungsgemäßen Kondensationsprodukten beträgt normalerweise, bezogen auf das Falzgewicht des Leders, 2 bis 30 Gew.-%, insbesondere 5 bis 25 Gew.-%. Die Flottenlänge beträgt üblicherweise 30 bis 200 % bei Blößen und 100 bis 2000 % bei Fellblößen, jeweils bezogen auf das Falzgewicht des Leders.

Nach und erforderlichenfalls auch vor der Behandlung wird das Leder bzw. Fell üblicherweise auf einen pH-Wert von 3 bis 5 eingestellt, wozu man beispielsweise Magnesiumoxid oder eine organische Säure wie Ameisensäure oder deren Salze verwendet, und gegen Ende oder nach der Behandlung gewünschtenfalls gefärbt und gefettet.

Das derart nachgegerbte Leder oder Fell kann vor der Nachgerbung mit den erfindungsgemäßen Kondensationsprodukten zusätzlich mit anderen Gerbstoffen wie anderen Polymergerbstoffen oder Syntanen behandelt worden sein. Auch können die erfindungsgemäßen Kondensationsprodukte gleichzeitig mit derartigen zusätzlichen Gerbemitteln, beispielsweise in der Hauptgerbung, eingesetzt werden.

Als zusätzliche oder gleichzeitig eingesetzte Gerbstoffe kommen alle üblichen Mittel mit Gerbwirkung auf Blößen oder Fellblößen in Betracht. Eine umfassende Abhandlung derartiger Gerbstoffe findet sich beispielsweise in Ullmanns Encyklopädie der technischen Chemie, 3. Auflage, 11. Band, Seiten 585 bis 612 (1960). Einzeln zu erwähnende Gerbstoffklassen sind die mineralischen Gerbstoffe, z. B. Chrom-, Aluminum-, Titan- und Zirkoniumsalze, die synthetischen Gerbstoffe wie die bereits oben genannten Polymergerbstoffe und Syntane, und die vegetabilischen (pflanzlichen) Gerbstoffe.

Die mit den erfindungsgemäßen Kondensationsprodukten erzeugten, insbesondere chromvorgegerbten Leder und Felle weisen eine extrem hohe Lichtechtheit und Wärmeresistenz auf und zeichnen sich weiterhin durch gute Fülle, hohe Weichheit und Festnarbigkeit aus.

Leder und Felle, die mit den erfindungsgemäßen Kondensationsprodukten durch Alleingerbung oder auch beispielsweise durch Nachgerbung vom Chromleder hergestellt worden sind, lassen sich wegen ihrer hellen Farbe sehr gut anfärben und eignen sich insbesondere für hellere Lederfärbungen.

Die erfindungsgemäßen Kondensationsprodukte selbst weisen eine ausreichend hohe Gerbwirkung auf, sind ausreichend wasserlöslich und lagerstabil.

Ein besonderer Vorteil der erfindungsgemäßen Kondensationsprodukte ist darin zu sehen, daß sie nur einen extrem geringen Restgehalt an toxischen oder gesundheitsgefährdenden unsulfonierten monomeren Phenolen besitzen.

Gegenstand der vorliegenden Erfindung sind weiterhin die erfindungsgemäßen Gerbstoffe selbst sowie ein Verfahren zum Alleingerben, Vorgerben und Mitgerben von Blößen und Fellblößen und zum Nachgerben von Leder und Fell unter Verwendung der erfindungsgemäßen Kondensationsprodukte.

Die erfindungsgemäßen Kondensationsprodukte eignen sich in hervorragender Weise auch als Sprühhilfsmittel für redispergierbare Polymerpulver.

So können die erfindungsgemäßen Kondensationsprodukte vornehmlich auf wäßriger Basis beruhenden Polymerisat-Dispersionen allein oder zusammen mit weiteren üblichen Sprühhilfsmitteln zugesetzt werden, bevor diese zur Herstellung von redispergierbaren Polymerpulvern versprüht werden. Das Versprühen der die erfindungsgemäßen Kondensationsprodukte enthaltenden Polymerisat-Dispersionen kann in an sich üblicher Weise, insbesondere unter Verwendung von Einstoff- oder Mehrstoffdüsen oder von Zerstäuberscheiben durchgeführt werden. Dabei werden die Dispersionen im allgemeinen in einen Warmluftstrom versprüht, in dem das Wasser und/oder das Lösungsmittel verdampft. Das Versprühen kann bei atmosphärischem Druck oder unter vermindertem Druck durchgeführt werden. Im allgemeinen beträgt die Temperatur des für das Sprühtrocknen eingesetzten Warmluftstroms 100 bis 200°C, insbesondere 120 bis 170°C. Das Abscheiden der getrockneten redispergierbaren Polymerpulver kann in an sich üblicher Weise, insbesondere unter Verwendung von Zyklonen oder Filterabscheidern, durchgeführt werden.

Als Monomerbausteine für die eingesetzten Dispersionen können vor allem olefinisch ungesättigte Monomere, insbesondere Acrylsäure, Methacrylsäure, Acrylsäure- und Methacrylsäure-C₁-C₈-alkylester, wie beispielsweise Methyl(meth)acrylat, Ethyl(meth)acrylat, n-Butyl(meth)acrylat oder 2-Ethylhexyl(meth)acrylat, vinylaromatische Monomere wie Styrol, Vinylester von Carbonsäuren wie Vinylacetat, Vinylpropionat, Vinyllaurat oder Vinylester von Versaticsäuren, Diolefine wie Butadien, ferner Vinylchlorid, Vinylidenchlorid, Acrylnitril, Itaconsäure, Acrylsäure- und Methacrylsäureamid, N-Methylol(meth)acrylsäureamid oder bei Copolymerisaten Ethylen eingesetzt werden. Die Polymerisate können als Homopolymerisate oder als Copolymerisate aus zwei oder mehr Monomerbausteinen vorliegen.

Eine bevorzugte Monomerenzusammensetzung sieht wie folgt aus:
30 bis 75 Gew.-% eines Acrylsäure- oder Methacrylsäure-C₁-C₈-alkylesters,
25 bis 70 Gew.-% Styrol und
0 bis 5 Gew.-% Acrylsäure- oder Methacrylsäureamid oder einer Mischung hieraus.

Die Menge der eingesetzten Sprühhilfsmittel ist im Prinzip nach oben hin offen, beträgt in der Regel jedoch, bezogen auf die Menge des Feststoffgehaltes der Polymerisat-Disperionen, 1 bis 50 Gew.-%, vorzugsweise 5 bis 30 Gew.-%, insbesondere 5 bis 20 Gew.-%. Weiterhin ist es auch möglich, die erfindungsgemäßen Sprühhilfsmittel zusammen mit anderen hierbei üblichen Hilfsmitteln einzusetzen, beispielsweise weiteren Sprühhilfsmitteln wie den in (5) und (6) genannten Verbindungen oder wie Polyvinylpyrrolidonen, Polyvinylalkoholen oder Vinylpyrrolidon-Vinylacetat-Copolymeren oder inerten anorganischen Zusätzen wie Silicaten oder Kreiden.

Die erfindungsgemäßen Sprühhilfsmittel können sowohl in neutraler Form (etwa pH 7) als auch in saurer Form (vorzugsweise pH 3 bis 5) nach Zugabe von Säuren eingesetzt werden.

Die mit den erfindungsgemäßen Sprühhilfsmitteln hergestellten redispergierbaren Polymerpulver weisen eine ausreichende Blockfestigkeit auf, zeigen eine geringe Absetzneigung beim Redispergieren und sind vor allem leicht redispergierbar. Sie können nach dem Aufrühren in Wasser zu Filmen ausgegossen werden, deren Reipkraft und Reipdehnung den üblichen Anforderungen voll gerecht werden. Weiterhin sind sie farblos, was zu keinerlei Farbbeeinträchtigungen der mit ihnen erzeugten Endprodukte führt. Sie können bei Raumtemperatur problemlos gelagert werden, ohne zusammenzubacken.

Gegenstand der vorliegenden Erfindung sind weiterhin die erfindungsgemäßen Sprühhilfsmittel selbst sowie ein Verfahren zum Versprühen von Polymerisat-Dispersionen zur Herstellung von redispergierbaren Polymerpulvern unter Verwendung der erfindungsgemäßen Kondensationsprodukte.

### Herstellungsbeispiele

Die in den folgenden Beispielen genannten Prozentangaben und Teile verstehen sich als Gewichtseinheiten.

### Beispiel 1

### (Phenolsulfonsäure-Harnstoff-Melamin-Formaldehyd-Kondensationsprodukt)

94 g (1,0 mol) Phenol wurden mit 112 g (1,1 mol) konz. Schwefelsäure 3 h bei 105°C gerührt. Nach Zugabe von 100 g Wasser wurden 8 g (0,06 mol) Melamin und 54 g (0,90 mol) Harnstoff zugefügt. 190 g (1,90 mol) 30 %iges wäßriges Formaldehyd wurden innerhalb von 60 Minuten bei 70°C zudosiert. Danach wurde der pH-Wert mit 50 %iger NaOH auf 2,0 eingestellt und es wurde 2 Stunden bei 90°C nachkondensiert. Danach wurde der pH-Wert mit 50 %iger NaOH auf 7 eingestellt und mit 48 g einer Mischung aus 30 Teilen Bernsteinsäure, 42 Teilen Glutarsäure und 28 Teilen Adipinsäure wieder auf 3,8 gesenkt. Der Gehalt an Rest-Phenol betrug 7 ppm.

### Beispiel 2

### (Phenolsulfonsäure-Harnstoff-Melamin-Formaldehyd-Kondensationsprodukt)

### 1. Stufe

94 g (1,0 mol) Phenol wurden mit 125 g (1,22 mol) konz. Schwefelsäure 3 h bei 105°C gerührt. Nach Zugabe von 46 g Wasser wurden 64,5 g (1,07 mol) Harnstoff zugegeben. Innerhalb von 60 Minuten wurden 190 g (1,90 mol) 30 %iges wäßriges Formaldehyd bei 65 bis 70°C zudosiert. Nach 15 Minuten Rühren bei 70°C wurde der pH-Wert mit 110 g 50 %iger NaOH auf 2,0 eingestellt.

### 2. Stufe

94 g (1,0 mol) Phenol wurden mit 110 g (1,08 mol) konz. Schwefelsäure 3 h bei 65 bis 70°C gerührt. Nach Zugabe von 50 g Wasser wurden 17 g (0,13 mol) Melamin und 48 g (0,80 mol) Harnstoff zugefügt. Innerhalb von 90 Minuten wurden bei 65 bis 70°C 175 g (1,75 mol) 30 %iges wäßriges Formaldehyd zudosiert. Nach 15 Minuten Rühren bei 70°C wurde der pH-Wert mit 90 g 50 %iger NaOH auf 2,0 eingestellt.

Die vereinigten Lösungen aus Stufe 1 und 2 wurden bei 90°C 2 Stunden gerührt. Der pH-Wert wurde mit 50 %iger NaOH auf 7,0 eingestellt. Durch Zugabe von 52 g einer Mischung aus 30 Teilen Bernsteinsäure, 42 Teilen Glutarsäure und 28 Teilen Adipinsäure wurde der pH wieder auf 3,8 gesenkt. Der Gehalt an Rest-Phenol betrug 10 ppm.

### Beispiel 3

### (Phenolsulfonsäure-Harnstoff-Melamin-Formaldehyd-Kondensationsprodukt)

### 1. Stufe

141 g (1,50 mol) Phenol wurden mit 187 g (1,83 mol) konz. Schwefelsäure 3 h bei 105°C gerührt. Nach Zugabe von 69 g Wasser wurden 97,5 g (1,62 mol) Harnstoff zugegeben. Innerhalb von 60 Minuten wurden 285 g (2,85 mol) 30 %iges wäßriges Formaldehyd bei 65 bis 70°C zudosiert. Nach 15 Minuten Rühren bei 70°C wurde der pH-Wert mit 173 g 50 %iger NaOH auf 2,0 eingestellt.

### 2. Stufe

141 g (1,50 mol) Phenol wurden mit 165 g (1,62 mol) konz. Schwefelsäure 3 h bei 105°C gerührt. Nach Zugabe von 75 g Wasser wurden 23 g (0,18 mol) Melamin und 72 g (1,20 mol) Harnstoff zugefügt. Innerhalb von 90 Minuten wurden bei 65 bis 70°C 262,5 g (2,63 mol) 30 %iges wäßriges Formaldehyd zudosiert. Nach 15 Minuten Rühren bei 70°C wurde der pH-Wert mit 124 g 50 %iger NaOH auf 2,0 eingestellt.

Die vereinigten Lösungen aus Stufe 1 und 2 wurden bei 90°C 2 h gerührt. Der pH-Wert wurde mit 50 %iger NaOH auf 7,0 eingestellt. Durch Zugabe von 26 g Ameisensäure wurde der pH wieder auf 3,8 gesenkt. Der Gehalt an Rest-Phenol betrug 3 ppm.

### Beispiel 4

### (Phenolsulfonsäure-Harnstoff-Dicyandiamid-Formaldehyd-Kondensationsprodukt)

94 g (1,0 mol) Phenol wurden mit 112 g (1,1 mol) konz. Schwefelsäure 3 h bei 105°C gerührt. Nach Zugabe von 100 g Wasser wurden 15 g (0,18 mol) Dicyandiamid und 54 g (0,90 mol) Harnstoff zugefügt. 195 g (1,95 mol) 30 %iges wäßriges Formaldehyd wurden innerhalb von 60 Minuten bei 70°C zudosiert. Dann wurde der pH-Wert mit 50 %iger NaOH auf 2,0 eingestellt und es wurde 2 Stunden bei 90°C nachkondensiert. Danach wurde der pH-Wert mit 50 %iger NaOH auf 7 eingestellt und mit 48 g einer Mischung aus 30 Teilen Bernsteinsäure, 42 Teilen Glutarsäure und 28 Teilen Adipinsäure wieder auf 3,8 gesenkt. Der Gehalt an Rest-Phenol betrug 10 ppm.

### Beispiel 5

### (Phenolsulfonsäure-Harnstoff-Tris-(5-hydroxy-3-oxapentyl)-melamin-Formaldehyd-Kondensationsationsprodukt)

94 g (1,0 mol) Phenol wurden mit 112 g (1,1 mol) konz. Schwefelsäure 3 h bei 105°C gerührt. Nach Zugabe von 100 g Wasser wurden 39 g (0,1 mol) Tris-(5-hydroxy-3-oxapentyl)-melamin und 48 g (0,8 mol) Harnstoff zugefügt. 175 g (1,75 mol) 30 %iges wäßriges Formaldehyd wurden innerhalb von 60 Minuten bei 80°C zudosiert. Danach wurde der pH-Wert mit 50 %iger NaOH auf 2,0 eingestellt und es wurde 2 Stunden bei 70°C nachkondensiert. Dann wurde der pH-Wert mit 50 %iger NaOH auf 7 eingestellt und mit 50 g einer Mischung aus 30 Teilen Bernsteinsäure, 42 Teilen Glutarsäure und 28 Teilen Adipinsäure wieder auf 3,8 gesenkt. Der Gehalt an Rest-Phenol betrug 5 ppm.

### Anwendungsbeispiele für die erfindungsgemäßen Kondensationsprodukte als Gerbstoffe bei der Lederherstellung

Die in den folgenden Beispielen genannten Prozentangaben bedeuten stets Gewichtsprozent und beziehen sich auf das Blößen- bzw. Falzgewicht.

### Beispiel 6

### (Alleingerbung)

Zu gepickelter Rindsblöße der Spaltstärke von 3 mm in 50 % Pickelflotte wurden bei Raumtemperatur portionsweise 25 % Kondensationsprodukt aus Beispiel 1 gelöst in 75 % Wasser zugegeben. Nach einer Gerbdauer von ca. 15 Stunden im Faß bei pH 3,4 und bei 20°C wurde kurz gespült, anschließend mit 5 % eines handelsüblichen lichtechten Lickers gefettet und mit 0,5 % Ameisensäure fixiert.

Die Schrumpfungstemperatur des Leders lag bei 73°C. Das nach Trocknung und Stollen erhaltene Leder wies neben guter Fülle einen hohen Weißgrad auf. Es zeigte zudem sehr hohe Lichtechtheit und gute Wärmeresistenz.

### Beispiel 7

### (Nachgerbung von Chromleder)

Ein Rindwetblue der Falzstärke 1,2 mm wurde zunächst mit 300 % Wasser von 30°C und 0,5 % Oxalsäure gewaschen und anschließend in 100 % Flotte bei 30°C mit Natriumhydrogencarbonat und Natriumformiat auf einen pH von 5,3 entsäuert. Nach kurzem Spülen wurde das Leder in 100 % Flotte zunächst bei 40°C mit 2 % handelsüblichem Polymergerbstoff auf Acrylsäurebasis und 1 % Titandioxid vorbehandelt. Anschließend wurde portionsweise mit insgesamt 8 % Kondensationsprodukt aus Beispiel 2 bei 60°C während 1 Stunde im Faß nachgegerbt, mit 0,5 % Ameisensäure ein pH-Wert von 3.8 eingestellt und nochmals mit 2 % Kondensationsprodukt aus Beispiel 2 wie oben nachbehandelt. Nach erneutem Spülen wurde in 100 % Flotte mit 10 % eines handelsüblichen synthetischen Fettlickers bei 60°C gefettet und mit 1 % Ameisensäure auf einen pH-Wert von 3,0 fixiert.

Man erhielt nach Trocknen, Stollen und Millen nahezu weißes Nappaleder mit guter Fülle und glattem Narben. Es zeigte außerdem hohe Lichtechtheit und gute Wärmeresistenz.

### Beispiel 8

### (Nachgerbung von Chromleder)

Ein Rindwetblue der Falzstärke 1,5 mm wurde in üblicher Weise gespült, gewaschen und anschließend in 100 % Flotte bei 40°C mit Natriumformiat und Natriumhydrogencarbonat auf einen pH von 4,5 entsäuert. Dann wurde in 100 % neuer Flotte mit 8 % Kondensationsprodukt aus Beispiel 3 bei 40°C im Faß nachgegerbt. Nach 90 Min. Walken wurde das Leder erneut gespült und in 100 % Flotte bei 50°C mit einem üblichen Metallkomplex-Lederfarbstoff gefärbt, wie üblich gefettet und mit Ameisensäure auf einen pH von 4,0 eingestellt. Nach kurzem Spülen wurde das Leder ausgereckt, getrocknet und gestollt.

Man erhielt ein gut gefärbtes, kompaktes Leder mit ausgezeichneter Fülle und enganliegendem, glattem Narben, das sich beispielsweise als Schuhoberleder eignet.

### Beispiel 9

### (Nachgerbung von Chromleder)

Analog zu Beispiel 8 wurde mit dem Kondensationsprodukt aus Beispiel 4 ein gut gefülltes, festnarbiges Leder mit nur wenig aufgehellter Färbung hergestellt.

### Beispiel 10

### (Alleingerbung)

Analog zu Beispiel 6 wurde mit 8 % Kondensationsprodukt aus Beispiel 5 ein gut gefülltes, weiches Leder mit einer Schrumpfungstemperatur von 77°C mit hoher Lichtechtheit und Wärmeresistenz hergestellt.

Anwendungsbeispiele für die erfindungsgemäßen Kondensationsprodukte als Sprühhilfsmittel für redispergierbare Polymerpulver

Die in den folgenden Beispielen genannten Prozentangaben und Teile verstehen sich als Gewichtseinheiten.

Die Dispersionen D1 bis D11 (siehe Tabelle 1) wurden nach folgender allgemeiner Herstellvorschrift dargestellt:

Eine Lösung von 0,31 g Natriumperoxodisulfat in 142,0 g Wasser wurde mit 5,2 g ethoxyliertem p-Isooctylphenol (EO-Grad 25) versetzt und auf 90°C erhitzt. Anschließend gab man innerhalb von 3,5 h bei dieser Temperatur gleichzeitig die Zuläufe 1 und 2 hinzu.

### Zulauf 1:

537,7 g Monomermischung der Zusammensetzung gemäß Tabelle 1
1,6 g ethoxyliertes p-Isooctylphenol (EO-Grad 25) und
3,6 g des Na-Salzes eines ethoxylierten und sulfatierten p-Isooctylphenols (EO-Grad 25) in
158,8 g Wasser;

### Zulauf 2:

2,79 g Natriumperoxodisulfat in 65,0 g Wasser.

Anschließend wurde 1 h nachpolymerisiert. Danach wurde gegebenenfalls mit Wasser auf den angegebenen Feststoffgehalt eingestellt. Nach dem Abkühlen auf Raumtemperatur stellte man mit einer 20 %igen wäßrigen Calciumhydroxid-Aufschlämmung einen pH-Wert von ca. 9 ein.

Tabelle 1 zeigt die Zusammensetzung, den Feststoffgehalt und die Glastemperatur Tg der erhaltenen wäßrigen Dispersionen.

**Tabelle 1 -**

| Dispersionen | | | | | | |
|---|---|---|---|---|---|---|
| Dispersion | Zusammensetzung [%] | | | | Feststoffgehalt [%] | Tg [°C] |
| D1 | 58 EHA | 39 S | 2 AM | 1 MAm | 57,2 | - 7 |
| D2 | 50 EHA | 47 S | 2 AM | 1 MAm | 55,5 | 5 |
| D3 | 45 EHA | 52 S | 2 AM | 1 MAm | 57,0 | 15 |
| D4 | 37 EHA | 60 S | 2 AM | 1 MAm | 56,1 | 31 |
| D5 | 32 EHA | 65 S | 2 AM | 1 MAm | 55,5 | 41 |
| D6 | 70 nBA | 26 S | 4 AM | | 45,5 | -12 |
| D7 | 60 nBA | 36 S | 4 AM | | 45,2 | 3 |
| D8 | 55 nBA | 41 S | 4 AM | | 45,4 | 11 |
| D9 | 52 nBA | 45 S | 2 AM | 1 MAm | 54,9 | 16 |
| D10 | 48 nBA | 48 S | 4 AM | | 45,3 | 21 |
| D11 | 40 nBA | 56 S | 4 AM | | 44,8 | 34 |

Die Dispersionen D1 bis D5 wurden unter Zuhilfsnahme von 2 % eines Homopolymeren aus 2-Acrylamido-2,2-dimethylethansulfonsäure als Schutzkolloid hergestellt.
EHA = 2-Ethylhexylacrylat, nBA = n-Butylacrylat, S = Styrol,
Am = Acrylamid, MAm = Methacrylamid

### Beispiele 11 bis 23 und Vergleichsbeispiele A bis C

Die Dispersionen D1 bis D11 wurden mit den in Tabelle 2 angegebenen Mengen der Sprühhilfsmittel (die Prozentangabe bezieht sich auf den Feststoffgehalt der Dispersionen) vermischt und die Mischungen durch Zugabe von Wasser auf einen Gesamtfeststoffgehalt von 35 % verdünnt. Als erfindungsgemäßes Sprühhilfsmittel wurde in allen Fällen das Kondensationsprodukt aus Beispiel 2 verwendet.

Die Mischungen wurden in einem Labortrockner Typ Minor der Fa. Niro mit einer Leistung von 2 kg Abmischung/h über eine Zweistoffdüse getrocknet.

**Tabelle 2 -**

| Sprühtrocknungen | | |
|---|---|---|
| Beispiel Nr. | Dispersion | Sprühhilfsmittel [Menge in %] |
| 11 | D1 | 20 |
| 12 | D1 | 15 |
| 13 | D1 | 10 |
| 14 | D2 | 20 |
| 15 | D3 | 20 |
| 16 | D4 | 20 |
| 17 | D5 | 20 |
| 18 | D6 | 20 |
| 19 | D7 | 20 |
| 20 | D8 | 20 |
| 21 | D9 | 15 |
| 22 | D10 | 20 |
| 23 | D11 | 20 |

| Zum Vergleich: | | |
|---|---|---|
| A | D1 | 20 |
| B | D1 | 2 |
| C | D4 | 20 |

In den Beispielen A bis C wurde ein handelsübliches Sprühhilfsmittel auf Basis eines Melaminsulfonsäure-Formaldehyd-Kondensationsproduktes gemäß Literatur (6) verwendet.

Die erhaltenen Pulver wurden in Bezug auf Redispergierbarkeit und Blockfestigkeit geprüft. Weiterhin wurden von den Filmen der redispergierten Pulver Reipkraft und Reipdehnung bestimmt. Die Ergebnisse dieser Prüfungen sind in Tabelle 3 zusammengefaßt.

**Tabelle 3 -**

| Anwendungstechnische Prüfungen | | | | |
|---|---|---|---|---|
| Pulver gemäß Beispiel Nr. | Redispergierbarkeit [Note] | Blockfestigkeit [Note] | Reißkraft [Nmm⁻] | Reißdehnung [%] |
| 14 | 2 | 4 | 3,5 | 400 |
| 15 | 2 | 3 | 6,5 | 320 |
| 16 | 2 | 4 | - | - |
| 17 | 2 | 2 | - | - |
| 18 | 3 | 4 | 2,0 | 780 |
| 19 | 2 | 3 | 4,5 | 500 |
| 20 | 2 | 3 | 6,5 | 400 |
| 22 | 2 | 3 | 9,5 | 280 |
| 23 | 2 | 3 | - | - |

### Redispergierbarkeit:

Noten von 1 (= sehr leicht redispergierbar) bis 5 (= nicht redispergierbar).

### Blockfestigkeit:

Das Pulver wird in ein Gefäß (Durchmesser = 6,5 cm) eingefüllt und mit einem zylindrischen Gewicht von 4840 g (Durchmesser = 6,2 cm) beaufschlagt. Nach drei Tagen wird beurteilt, inwieweit das Pulver verblockt ist; Noten von 1 (beste) bis 5 (schlechteste).

### Reißkraft und Reißdehnung:

Die Messungen der Werte wurden in Anlehnung an DIN 53 455 durchgeführt. Die Filme wurden mit einer Geschwindigkeit von 200 mm/min gedreht.

## Patentansprüche (Patentansprüche für folgende(n) Vertragsstaat(en): CH, DE, FR, GB, IT, LI)

1. Kondensationsprodukte aus sulfonierten Phenolen, Harnstoff, weiteren organischen Stickstoff-Basen und Formaldehyd, erhältlich durch
(A) Sulfonierung von Phenolen mit 1,0 bis 1,5 mol Schwefelsäure pro Mol Phenol und
(B) Kondensation dieser Sulfonierungsprodukte in saurem Milieu bei pH-Werten von 0 bis etwa 5 mit
(a) 0,5 bis 1,8 mol Harnstoff pro Mol Phenol,
(b) 0,001 bis 0,5 mol mindestens einer weiteren organischen Stickstoff-Base pro Mol Phenol aus der Gruppe
- Melamin (2,4,6-Triamino-1,3, 5-triazin);
- Melamin-Derivate in Form von Hydroxy-C₂-C₂₀-alkyl-melaminen, Bis-hydroxy-C₂-C₂₀-alkyl-melaminen oder Tris-hydroxy-C₂-C₂₀-alkyl-melaminen, wobei die Alkylgruppe geradkettig oder verzweigt sein kann und die Hydroxylgruppe an einem primären, sekundären oder tertiären C-Atom stehen kann, Hydroxyaryl-melaminen oder Melaminen mit ein bis drei Polyalkylenoxid-Ketten an den N-Atomen, wobei diese polyalkoxylierten Verbindung durch Ethoxylierung, Propoxylierung oder Butoxylierung von Melamin hergestellt werden und Alkoxylierungsgrade von jeweils 2 bis 4 aufweisen;
- Melem (2,5,8-Triamino-1,3,4,6,7,9,9b-heptaazaphenalen);
- Melem-Derivate in Form von Hydroxy-C₂-C₂₀-alkylmelemen oder Melemen mit Polyethylen-, Polypropylen- oder Polybutylenoxid-Seitenketten mit einem Alkoxylierungsgrad von jeweils 2 bis 4 an den N-Atomen;
- Guanamine (in 6-Stellung substituierte 2,4-Diamino-1,3,5-triazine);
- Derivate von Guanaminen in Form von N-Hydroxy-C₂-C₂₀-alkyl-guanaminen, wobei die Alkylgruppe geradkettig oder verzweigt sein kann und die Hydroxylgruppe an einem primären, sekundären oder tertiären C-Atom stehen kann, oder Guanaminen mit ein oder zwei Polyalkylenoxid-Ketten an den N-Atomen, wobei diese polyalkoxylierten Verbindungen durch Ethoxylierung, Propoxylierung oder Butoxylierung von Guanaminen hergestellt werden und Alkoxylierungsgrade von jeweils 2 bis 4 aufweisen;
- Dicyandiamid;
und
(c) 1,0 bis 3,0 mol Formaldehyd pro Mol Phenol.

2. Verfahren zur Herstellung von Kondensationsprodukten aus sulfonierten Phenolen, Harnstoff, weiteren organischen Stickstoff-Basen und Formaldehyd, dadurch gekennzeichnet, daß man
(A) Phenole mit 1,0 bis 1,5 mol Schwefelsäure pro Mol Phenol sulfoniert und
(B) diese Sulfonierungsprodukte in saurem Milieu bei pH-Werten von 0 bis etwa 5 mit
(a) 0,5 bis 1,8 mol Harnstoff pro Mol Phenol,
(b) 0,001 bis 0,5 mol mindestens einer weiteren organischen Stickstoff-Base pro Mol Phenol aus der Gruppe
- Melamin (2,4,6-Triamino-1,3,5-triazin);
- Melamin-Derivate in Form von Hydroxy-C₂-C₂₀-alkyl-melaminen, Bis-hydroxy-C₂-C₂₀-alkyl-melaminen oder Tris-hydroxy-C₂-C₂₀-alkyl-melaminen, wobei die Alkylgruppe geradkettig oder verzweigt sein kann und die Hydroxylgruppe an einem primären, sekundären oder tertiären C-Atom stehen kann, Hydroxyaryl-melaminen oder Melaminen mit ein bis drei Polyalkylenoxid-Ketten an den N-Atomen, wobei diese polyalkoxylierten Verbindung durch Ethoxylierung, Propoxylierung oder Butoxylierung von Melamin hergestellt werden und Alkoxylierungsgrade von jeweils 2 bis 4 aufweisen;
- Melem (2,5,8-Triamino-1,3,4,6,7,9,9b-heptaazaphenalen);
- Melem-Derivate in Form von Hydroxy-C₂-C₂₀-alkylmelemen oder Melemen mit Polyethylen-, Polypropylen- oder Polybutylenoxid-Seitenketten mit einem Alkoxylierungsgrad von jeweils 2 bis 4 an den N-Atomen;
- Guanamine (in 6-Stellung substituierte 2,4-Diamino-1,3,5-triazine);
- Derivate von Guanaminen in Form von N-Hydroxy-C₂-C₂₀-alkyl-guanaminen, wobei die Alkylgruppe geradkettig oder verzweigt sein kann und die Hydroxylgruppe an einem primären, sekundären oder tertiären C-Atom stehen kann, oder Guanaminen mit ein oder zwei Polyalkylenoxid-Ketten an den N-Atomen, wobei diese polyalkoxylierten Verbindungen durch Ethoxylierung, Propoxylierung oder Butoxylierung von Guanaminen hergestellt werden und Alkoxylierungsgrade von jeweils 2 bis 4 aufweisen;
- Dicyandiamid;
und
(c) 1,0 bis 3,0 mol Formaldehyd pro Mol Phenol
kondensiert.

3. Gerbstoffe zum Alleingerben, Vorgerben und Mitgerben von Blößen und Fellblößen und zum Nachgerben von Leder und Fell, enthaltend Kondensationsprodukte gemäß Anspruch 1.

4. Verwendung von Kondensationsprodukten gemäß Anspruch 1 als Gerbstoffe zum Alleingerben, Vorgerben und Mitgerben von Blößen und Fellblößen und zum Nachgerben von Leder und Fell.

5. Verfahren zum Alleingerben, Vorgerben und Mitgerben von Blößen und Fellblößen und zum Nachgerben von Leder und Fell, dadurch gekennzeichnet, daß man hierzu als Gerbstoffe Kondensationsprodukte gemäß Anspruch 1 verwendet.

6. Sprühhilfsmittel für redispergierbare Polymerpulver, enthaltend Kondensationsprodukte gemäß Anspruch 1.

7. Verwendung von Kondensationsprodukten gemäß Anspruch 1 als Sprühhilfsmittel für redispergierbare Polymerpulver.

8. Verfahren zum Versprühen von Polymerisat-Dispersionen zur Herstellung von redispergierbaren Polymerpulvern, dadurch gekennzeichnet, daß man hierzu als Sprühhilfsmittel Kondensationsprodukte gemäß Anspruch 1 verwendet.

## Patentansprüche (Patentansprüche für folgende(n) Vertragsstaat(en): SP, PT)

1. Verfahren zur Herstellung von Kondensationsprodukten aus sulfonierten Phenolen, Harnstoff, weiteren organischen Stickstoff-Basen und Formaldehyd, dadurch gekennzeichnet, daß man
(A) Phenole mit 1,0 bis 1,5 mol Schwefelsäure pro Mol Phenol sulfoniert und
(B) diese Sulfonierungsprodukte im sauren Milieu bei pH-Werten von 0 bis etwa 5 mit
(a) 0,5 bis 1,8 mol Harnstoff pro Mol Phenol,
(b) 0,001 bis 0,5 mol mindestens einer weiteren organischen Stickstoff-Base pro Mol Phenol aus der Gruppe
- Melamin (2,4,6-Triamino-1,3,5-triazin) ;
- Melamin-Derivate in Form von Hydroxy-C₂-C₂₀-alkyl-melaminen, Bis-hydroxy-C₂-C₂₀-alkyl-melaminen oder Tris-hydroxy-C₂-C₂₀-alkyl-melaminen, wobei die Alkylgruppe geradkettig oder verzweigt sein kann und die Hydroxylgruppe an einem primären, sekundären oder tertiären C-Atom stehen kann, Hydroxyaryl-melaminen oder Melaminen mit ein bis drei Polyalkylenoxid-Ketten an den N-Atomen, wobei diese polyalkoxylierten Verbindung durch Ethoxylierung, Propoxylierung oder Butoxylierung von Melamin hergestellt werden und Alkoxylierungsgrade von jeweils 2 bis 4 aufweisen;
- Melem (2,5,8-Triamino-1,3,4,6,7,9,9b-heptaazaphenalen);
- Melem-Derivate in Form von Hydroxy-C₂-C₂₀-alkylmelemen oder Melemen mit Polyethylen-, Polypropylen- oder Polybutylenoxid-Seitenketten mit einem Alkoxylierungsgrad von jeweils 2 bis 4 an den N-Atomen;
- Guanamine (in 6-Stellung substituierte 2,4-Diamino-1,3,5-triazine);
- Derivate von Guanaminen in Form von N-Hydroxy-C₂-C₂₀-alkyl-guanaminen, wobei die Alkylgruppe geradkettig oder verzweigt sein kann und die Hydroxylgruppe an einem primären, sekundären oder tertiären C-Atom stehen kann, oder Guanaminen mit ein oder zwei Polyalkylenoxid-Ketten an den N-Atomen, wobei diese polyalkoxylierten Verbindungen durch Ethoxylierung, Propoxylierung oder Butoxylierung von Guanaminen hergestellt werden und Alkoxylierungsgrade von jeweils 2 bis 4 aufweisen;
- Dicyandiamid;
und
(c) 1,0 bis 3,0 mol Formaldehyd pro Mol Phenol.

2. Verfahren zum Alleingerben, Vorgerben und Mitgerben von Blößen und Fellblößen und zum Nachgerben von Leder und Fell, dadurch gekennzeichnet, daß man hierzu als Gerbstoffe Kondensationsprodukte gemäß Anspruch 1 verwendet.

3. Verfahren zum Versprühen von Polymerisat-Dispersionen zur Herstellung von redispergierbaren Polymerpulvern, dadurch gekennzeichnet, daß man hierzu als Sprühhilfsmittel Kondensationsprodukte gemäß Anspruch 1 verwendet.

## Claims (Claims for the following Contracting State(s): CH, DE, FR, GB, IT, LI)

1. Condensation products of sulfonated phenols, urea, further organic nitrogen bases and formaldehyde, obtainable by
(A) sulfonation of phenols with from 1.0 to 1.5 mol of sulfuric acid per mole of phenol, and
(B) condensation of these sulfonation products in an acid medium at a pH of from 0 to about 5 with
(a) from 0.5 to 1.8 mol of urea per mole of phenol,
(b) from 0.001 to 0.5 mol per mole of phenol of at least one further organic nitrogen base from the group
- melamine (2,4,6-triamino-1,3,5-triazine);
- melamine derivatives in the form of hydroxy-C₂-C₂₀-alkylmelamines, bishydroxyC₂-C₂₀-alkylmelamines or trishydroxy-C₂-C₂₀alkylmelamines, wherein the alkyl group can be straight-chain or branched and the hydroxyl group can be disposed on a primary, secondary or tertiary carbon atom, hydroxyarylmelamines or melamines having from one to three polyalkylene oxide chains on the nitrogen atoms, which polyalkoxylated compounds are prepared by ethoxylation, propoxylation or butoxylation of melamine and have in each case degrees of alkoxylation of from 2 to 4;
- melem (2,5,8-triamino-1,3,4,6,7,9,9b-heptaazaphenalene);
- melem derivatives in the form of hydroxy-C₂-C₂₀-alkylmelems or melems having on the nitrogen atoms polyethylene, polypropylene or polybutylene oxide side chains having in each case a degree of alkoxylation of from 2 to 4;
- guanamines (6-substituted 2,4-diamino-1,3,5-triazines);
- derivatives of guanamines in the form of N-hydroxy-C₂-C₂₀-alkylguanamines, wherein the alkyl group can be straight-chain or branched and the hydroxyl group can be disposed on a primary, secondary or tertiary carbon atom, or guanamines having one or two polyalkylene oxide chains on the nitrogen atoms, which polyalkoxylated compounds are prepared by ethoxylation, propoxylation or butoxylation of guanamines and have in each case degrees of alkoxylation of from 2 to 4;
- dicyandiamide;
and
(c) from 1.0 to 3.0 mol of formaldehyde per mole of phenol.

2. A process for preparing condensation products of sulfonated phenols, urea, further organic nitrogen bases and formaldehyde, comprising the steps of
(A) sulfonation of phenols with from 1.0 to 1.5 mol of sulfuric acid per mole of phenol, and
(B) condensation of these sulfonation products in an acid medium at a pH of from 0 to about 5 with
(a) from 0.5 to 1.8 mol of urea per mole of phenol,
(b) from 0.001 to 0.5 mol per mole of phenol of at least one further organic nitrogen base from the group
- melamine (2,4,6-triamino-1,3,5-triazine);
- melamine derivatives in the form of hydroxy-C₂-C₂₀-alkylmelamines, bis-hydroxy-C₂-C₂₀-alkylmelamines or tris-hydroxy-C₂-C₂₀-alkylmelamines, wherein the alkyl group can be straight-chain or branched and the hydroxyl group can be disposed on a primary, secondary or tertiary carbon atom, hydroxyarylmelamines or melamines having from one to three polyalkylene oxide chains on the nitrogen atoms, which polyalkoxylated compounds are prepared by ethoxylation, propoxylation or butoxylation of melamine and have in each case degrees of alkoxylation of from 2 to 4;
- melem (2,5,8-triamino-1,3,4,6,7,9,9b-heptaazaphenalene);
- melem derivatives in the form of hydroxy-C₂-C₂₀-alkylmelems or melems having on the nitrogen atoms polyethylene, polypropylene or polybutylene oxide side chains having in each case a degree of alkoxylation of from 2 to 4;
- guanamines (6-substituted 2,4-diamino1,3,5-triazines);
- derivatives of guanamines in the form of N-hydroxy-C₂-C₂₀-alkylguanamines, wherein the alkyl group can be straight-chain or branched and the hydroxyl group can be disposed on a primary, secondary or tertiary carbon atom, or guanamines having one or two polyalkylene oxide chains on the nitrogen atoms, which polyalkoxylated compounds are prepared by ethoxylation, propoxylation or butoxylation of guanamines and have in each case degrees of alkoxylation of from 2 to 4;
- dicyandiamide;
and
(c) from 1.0 to 3.0 mol of formaldehyde per mole of phenol.

3. Tanning agents for self-tanning, pretanning and assist tanning of leather pelts and skin pelts and for retanning leather and skin, comprising condensation products as claimed in claim 1.

4. The use of condensation products as claimed in claim 1 as tanning agents for self-tanning, pretanning and assist tanning of leather pelts and skin pelts and for retanning leather and skin.

5. A process for self-tanning, pretanning and assist tanning of leather pelts and skin pelts and for retanning leather and skin, which comprises using condensation products as claimed in claim 1 as tanning agents.

6. Spraying aids for redispersible polymer powders, comprising condensation products as claimed in claim 1.

7. The use of condensation products as claimed in claim 1 as spraying aids for redispersible polymer powders.

8. A process for spray dispensing polymer dispersions for preparing the redispersible polymer powders, which comprises using condensation products as claimed in claim 1 as spraying aids.

## Claims (Claims for the following Contracting State(s): SP, PT)

1. A process for preparing condensation products of sulfonated phenols, urea, further organic nitrogen bases and formaldehyde, comprising the steps of
(A) sulfonation of phenols with from 1.0 to 1.5 mol of sulfuric acid per mole of phenol, and
(B) condensation of these sulfonation products in an acid medium at a pH of from 0 to about 5 with
(a) from 0.5 to 1.8 mol of urea per mole of phenol,
(b) from 0.001 to 0.5 mol per mole of phenol of at least one further organic nitrogen base from the group
- melamine (2,4,6-triamino-1,3,5-triazine);
- melamine derivatives in the form of hydroxy-C₂-C₂₀-alkylmelamines, bis-hydroxy-C₂-C₂₀-alkylmelamines or tris-hydroxy-C₂-C₂₀-alkylmelamines, wherein the alkyl group can be straight-chain or branched and the hydroxyl group can be disposed on a primary, secondary or tertiary carbon atom, hydroxyarylmelamines or melamines having from one to three polyalkylene oxide chains on the nitrogen atoms, which polyalkoxylated compounds are prepared by ethoxylation, propoxylation or butoxylation of melamine and have in each case degrees of alkoxylation of from 2 to 4;
- melem (2,5,8-triamino-1,3,4,6,7,9,9b-heptaazaphenalene);
- melem derivatives in the form of hydroxy-C₂-C₂₀-alkylmelems or melems having on the nitrogen atoms polyethylene, polypropylene or polybutylene oxide side chains having in each case a degree of alkoxylation of from 2 to 4;
- guanamines (6-substituted 2,4-diamino-1,3,5-triazines);
- derivatives of guanamines in the form of N-hydroxy-C₂-C₂₀-alkylguanamines, wherein the alkyl group can be straight-chain or branched and the hydroxyl group can be disposed on a primary, secondary or tertiary carbon atom, or guanamines having one or two polyalkylene oxide chains on the nitrogen atoms, which polyalkoxylated compounds are prepared by ethoxylation, propoxylation or butoxylation of guanamines and have in each case degrees of alkoxylation of from 2 to 4;
- dicyandiamide;
and
(c) from 1.0 to 3.0 mol of formaldehyde per mole of phenol.

2. A process for self-tanning, pretanning and assist tanning of leather pelts and skin pelts and for retanning leather and skin, which comprises using condensation products as claimed in claim 1 as tanning agents.

3. A process for spray dispensing polymer dispersions for preparing the redispersible polymer powders, which comprises using condensation products as claimed in claim 1 as spraying aids.

## Revendications (Revendications pour l'(les) Etat(s) contractant(s) suivant(s): CH, DE, FR, GB, IT, LI)

1. Produits de condensation de phénols sulfonés, d'urée, d'autres bases organiques azotées et de formaldéhyde, obtenus par
A) sulfonation de phénols avec 1,0 à 1,5 mole d'acide sulfurique par mole de phénol et
B) condensation de ces produits de sulfonation, en milieu acide à un pH de 0 à environ 5, avec
a) 0,5 à 1,8 mole d'urée par mole de phénol,
b) 0,001 à 0,5 mole, par mole de phénol, d'au moins une autre base organique azotée choisie dans le groupe
- de la mélamine (2,4,6-triamino-1,3,5-triazine);
- de dérivée de la mélamine sous forme d'hydroxy(alkyl en C₂-C₂₀) mélamines, de bishydroxy(alkyl en C₂-C₂₀)mélamines ou de trishydroxy(alkyl en C₂-C₂₀) mélamines, le groupement alkyle pouvant être en chaîne linéaire ou ramifié et le groupement hydroxy pouvant être situé sur un atome de carbone primaire, secondaire ou tertiaire, d'hydroxyarylmélamines ou de mélamines comportant une à trois chaînes polyoxyalkylène sur les atomes d'azote, ce composé polyalcoxylé étant préparé par éthoxylation, propoxylation ou butoxylation de mélamine et présentant un degré d'alcoxylation de 2 à 4;
- du melem (2,5,8-triamino-1,3,4,à,7,g,9b-heptaazaphénalène);
- de dérivés du melem sous forme d'hydroxy-(alkyl en C₂-C₂₀)melems ou de melems comportant, sur les atomes d'azote, des chaînes latérales polyoxyéthylène, polyoxypropylène ou polyoxybutylène et ayant un degré d'alcoxylation de 2 à 4;
- de guanamines (2,4-diamino-1,3,5-triazines substituées en position 6);
- de dérivés de guanamines sous forme de N-hydroxy (alkyl en C₂-C₂₀)guanamines, le groupement alkyle pouvant être en chaîne linéaire ou ramifié et le groupement hydroxy pouvant être situé sur un atome de carbone primaire, secondaire ou tertiaire, ou de guanamines comportant une ou deux chaînes polyoxyalkylène sur les atomes d'azote, ces composés polyalcoxylés étant préparés par éthoxylation, propoxylation ou butoxylation de guanamines et présentant des degrés d'alcoxylation de 2 à 4; et
- du dicyandiamide;
et
c) 1,0 à 3,0 moles de formaldéhyde par mole de phénol.

2. Procédé de préparation de produits de condensation de phénols sulfonés, d'urée, d'autres bases organiques azotées et de formaldéhyde, caractérisé en ce que
A) l'on sulfone des phénols avec 1,0 à 1,5 mole d'acide sulfurique par mole de phénol et
B) on condense ces produits de sulfonation, en milieu acide à un pH de 0 à environ 5, avec
a) 0,5 à 1,8 mole d'urée par mole de phénol,
b) 0,001 à 0,5 mole, par mole de phénol, d'au moins une autre base organique azotée choisie dans le groupe
- de la mélamine (2,4,6-triamino-1,3,5triazine);
- de dérivés de la mélamine sous forme d'hydroxy(alkyl en C₂-C₂₀)mélamines, de bishydroxy(alkyl en C₂-C₂₀)mélamines ou de trishydroxy (alkyl en C₂-C₂₀)mélamines, le groupement alkyle pouvant être en chaîne linéaire ou ramifié et le groupement hydroxy pouvant être situé sur un atome de carbone primaire, secondaire ou tertiaire, d'hydroxyarylmélamines ou de mélamines comportant une à trois chaînes polyoxyalkylène sur les atomes d'azote, ce composé polyalcoxylé étant préparé par éthoxylation, propoxylation ou butoxylation de mélamine et présentant un degré d'alcoxylation de 2 à 4;
- du melem (2,5,8-triamino-1,3,4,à,7,9,9b-heptaazaphénaléne);
- de dérivés du melem sous forme d'hydroxy-(alkyl en C₂-C₂₀)melems ou de melems comportant, sur les atomes d'azote, des chaînes latérales polyoxyéthylène, polyoxy-propylène ou polyoxybutylène et ayant un degré d'alcoxylation de 2 à 4;
- de guanamines (2,4-diamino-1,3,5-triazines substituées en position 6);
- de dérivés de guanamines sous forme de Nhydroxy(alkyl en C₂-C₂₀)guanamines, le groupement alkyle pouvant être en chaîne linéaire ou ramifié et le groupement hydroxy pouvant être situé sur un atome de carbone primaire, secondaire ou tertiaire, ou de guanamines comportant une ou deux chaînes de polyoxyalkylène sur les atomes d'azote, ces composes polyalcoxylés étant préparés par éthoxylation, propoxylation ou butoxylation de guanamines et présentant des degrés d'alcoxylation de 2 à 4; et
- du dicyandiamide;
et
c) 1,0 à 3,0 moles de formaldéhyde par mole de phénol.

3. Matières tannantes pour le tannage isolé, le prétannage et le co-tannage de peaux pelanées et de peaux en poils et pour le retannage de cuirs et de peaux, contenant des produits de condensation selon la revendication 1.

4. Utilisation de produits de condensation selon la revendication 1 comme matières tannantes pour le tannage isolé, le prétannage et le co-tannage de peaux pelanées et de peaux en poils et pour le retannage de cuirs et de peaux.

5. Procédé de tannage isolé, de prétannage et de co-tannage de peaux pelanées et de peaux en poils et de retannage de cuirs et de peaux, caractérisé en ce que l'on utilise à cette fin, comme matières tannantes, des produits de condensation selon la revendication 1.

6. Agents auxiliaires de pulvérisation pour la préparation de poudres de polymères redispersables, contenant des produits de condensation selon la revendication 1.

7. Utilisation de produits de condensation selon la revendication 1 comme agents auxiliaires de pulvérisation pour la préparation de poudres de polymères redispersables.

8. Procédé de pulvérisation de dispersions de polymères pour la préparation de poudres de polymères redispersables, caractérisé en ce que l'on utilise à cette fin, comme agents auxiliaires de pulvérisation, des produits de condensation selon la revendication 1.

## Revendications (Revendications pour l'(les) Etat(s) contractant(s) suivant(s): SP, PT)

1. Procédé de préparation de produits de condensation de phénols sulfonés, d'urée, d'autres bases organiques azotées et de formaldéhyde, caractérisé en ce que
A) l'on sulfone des phénols avec 1,0 à 1,5 mole d'acide sulfurique par mole de phénol et
B) on condense ces produits de sulfonation, en milieu acide à un pH de 0 à environ 5, avec
a) 0,5 à 1,8 mole d'urée par mole de phénol,
b) 0,001 à 0,5 mole, par mole de phénol, d'au moins une autre base organique azotée choisie dans le groupe
- de la mélamine (2,4,6-triamino-1,3,5-triazine);
- de dérivés de la mélamine sous forme d'hydroxy(alkyl en C₂-C₂₀)mélamines, de bishydroxy(alkyl en C₂-C₂₀)mélamines ou de trishydroxy(alkyl en C₂-C₂₀) mélamines, le groupement alkyle pouvant être en chaîne linéaire ou ramifié et le groupement hydroxy pouvant être situé sur un atome de carbone primaire, secondaire ou tertiaire, d'hydraxyarylmélamines ou de mélamines comportant une trois chaînes polyaxyalkylènes sur les atomes d'azote, ce composé polyalcoxylé étant préparé par éthoxylation, propoxylation ou butoxylation de mélamine et présentant un degré d'alcoxylation de 2 à 4;
- du melem (2,5,8-triamino-1,3,4,à,7,9,9b-heptaazaphénalène);
- de dérivés du melem sous forme d'hydroxy(alkyl en C₂-C₂₀)melems ou de melems comportant, sur les atomes d'azote, des chaînes latérales polyoxyéthylène, polyoxy-propylène ou polyoxybutylène et ayant un degré d'alcoxylation de 2 à 4;
- de guanamines (2,4-diamino-1,3,5-triazines substituées en position 6);
- de dérivés de guanamines sous forme de N-hydroxy (alkyl en C₂-C₂₀)guanamines, le groupement alkyle pouvant être en chaîne linéaire ou ramifié et le groupement hydroxy pouvant être situé sur un atome de carbone primaire, secondaire ou tertiaire, ou de guanamines comportant une ou deux chaînes de polyoxyalkylène sur les atomes d'azote, ces composés polyalcoxylés étant préparés par éthoxylation, propoxylation ou butoxylation de guanamines et présentant des degrés d'alcoxylation de 2 à 4; et
- du dicyandiamide;
et
c) 1,0 à 3,0 moles de formaldéhyde par mole de phénol.

2. Procédé de tannage isolé, de prétannage et de co-tannage de peaux pelanées et de peaux en poils et de retannage de cuirs et de peaux, caractérisé en ce que l'on utilise à cette fin, comme matières tannantes, des produits de condensation selon la revendication 1.

3. Procédé de pulvérisation de dispersions de polymères pour la préparation de poudres de polymères redispersables, caractérisé en ce que l'on utilise à cette fin, comme agents auxiliaires de pulvérisation, des produits de condensation selon la revendication 1.
